# EUROPÄISCHE PATENTANMELDUNG

(11) **EP 3 950 431 A1**
(43) Veröffentlichungstag der Anmeldung: **09.02.2022**
(21) Anmeldenummer: 21185327.0
(22) Anmeldetag: 13.07.2021
(51) Int. Cl.: B60R 9/06

(54) **TRÄGERSYSTEM FÜR EIN KRAFTFAHRZEUG UND STÜTZSCHIENE FÜR EIN SOLCHES TRÄGERSYSTEM**

(30) Priorität: 07.08.2020 DE 202020104566 U
(71) Anmelder: ATERA GmbH, 88299 Leutkirch im Allgäu (DE)
(72) Erfinder: Wegner, Bert, 73333 Gingen (DE); Raida, Hans-Joachim, 42799 Leichlingen (DE)
(74) Vertreter: Patentanwälte Ruff, Wilhelm, Beier, Dauster & Partner mbB

(57) **Zusammenfassung**

Ein Trägersystem (1) für ein Kraftfahrzeug (F) mit einer an einem Außenbereich des Kraftfahrzeugs montierbaren Befestigungsvorrichtung (3), sowie mit einem Tragrahmen (4), an dem die Befestigungsvorrichtung angeordnet ist, und der wenigstens eine Stützschiene (5, 6) zur Abstützung von Vorder- und/oder Hinterrädern eines Fahrrads aufweist, ist bekannt. Erfindungsgemäß ist vorgesehen, dass die wenigstens eine Stützschiene eine relativ zu einer Horizontalen geneigte Innenflanke (6a) aufweist, die in montiertem Zustand des Tragrahmens am Kraftfahrzeug derart relativ zu einer Hochrichtung ausgerichtet ist, dass die Innenflanke für die Augen einer das Trägersystem betrachtenden Person (B) erkennbar ist, und dass auf der Innenflanke wenigstens ein Informationsabschnitt (9) derart angebracht ist, dass der Informationsabschnitt durch die Augen der Person erfassbar ist.

## Beschreibung

Die Erfindung betrifft ein Trägersystem für ein Kraftfahrzeug mit einer an einem Außenbereich des Kraftfahrzeugs montierbaren Befestigungsvorrichtung, sowie mit einem Tragrahmen, an dem die Befestigungsvorrichtung angeordnet ist, und der wenigstens eine Stützschiene zur Abstützung von Vorder- und/oder Hinterrädern eines Fahrrads aufweist. Die Erfindung betrifft zudem eine Stützschiene für ein derartiges Trägersystem.

Derartige Trägersysteme für den Transport von Fahrrädern außenseitig an einem Kraftfahrzeug sind allgemein bekannt. Bei Personenkraftwagen sind derartige Trägersysteme in einem Dachbereich oder in einem Heckbereich des Personenkraftwagens angeordnet. Bei einem in einem Heckbereich eines Vans oder eines Reisemobils angeordneten Trägersystem ist das Trägersystem mittels einer Befestigungsvorrichtung im Bereich einer Hecktür oder einer Heckwand montiert. Bei Personenkraftwagen mit einer Anhängekupplung weist das Trägersystem eine Befestigungsvorrichtung auf, die auf einem Kugelkopf der Anhängekupplung montierbar ist. Das Trägersystem weist einen Tragrahmen auf, der fest mit der Befestigungsvorrichtung verbunden ist. Der Tragrahmen trägt wenigstens eine Stützschiene, die zur Abstützung von Vorder- und/oder Hinterrädern eines Fahrrads ausgebildet ist. Der Stützschiene sind Befestigungsmittel zur Fixierung der Vorder- und/oder Hinterräder zugeordnet, vorzugsweise in Form von Fixierriemen.

Aufgabe der Erfindung ist es, ein Trägersystem sowie eine Stützschiene der eingangs genannten Art zu schaffen, die eine verbesserte Bedienbarkeit oder Identifizierbarkeit ermöglichen.

Diese Aufgabe wird für das Trägersystem dadurch gelöst, dass die wenigstens eine Stützschiene eine relativ zu einer Horizontalen geneigte Innenflanke aufweist, die in montiertem Zustand des Tragrahmens am Kraftfahrzeug derart relativ zu einer Hochrichtung ausgerichtet ist, dass die Innenflanke für die Augen einer das Trägersystem betrachtenden Person erkennbar ist, und dass auf der Innenflanke wenigstens ein Informationsabschnitt dauerhaft derart aufgebracht ist, dass der Informationsabschnitt durch die Augen der Person erfassbar ist. Die Ausrichtung der Innenflanke ist abhängig davon, wie die Stützschiene am Kraftfahrzeug in fertig montiertem Transportzustand positioniert ist. Maßgeblich ist es, dass die Augen einer durchschnittlich großen erwachsenen Person den Informationsabschnitt auf der Innenflanke im Wesentlichen unverzerrt, d.h. frontal, erfassen können. Die Blickrichtung der Augen trifft demzufolge zumindest weitgehend orthogonal auf die Innenflanke und damit auf den Informationsabschnitt. Der Informationsabschnitt ist in der Ebene der Innenflanke oder parallel zu der Ebene dieser Innenflanke ausgerichtet. Unter der dauerhaften Anbringung des Informationsabschnitts auf der Innenflanke ist eine Anbringung zu verstehen, die unabhängig von Witterungseinflüssen wie Sonnenstrahlung, Feuchtigkeit, Temperatur bestehen bleibt. Die Aufbringung oder Anbringung des Informationsabschnitts auf der Innenflanke darf demzufolge nicht so gestaltet sein, dass durch Feuchtigkeit oder Nässe, durch Abrieb, durch UV-Strahlung oder ähnliche physikalische oder chemische Umgebungseinflüsse ein Ablösen oder Verschwinden des Informationsabschnitts eintritt. Vorzugsweise ist die Stützschiene in am Kraftfahrzeug montiertem Zustand des Trägersystems in einem Heckbereich des Kraftfahrzeugs angeordnet, vorzugsweise entweder im Bereich einer Heckwand, einer Hecktür oder einer Heckklappe, oder im Bereich einer Anhängekupplung.

Der entsprechende Informationsabschnitt ist vorzugsweise mit Informationen über einen Hersteller des Trägersystems, eine Produktkennzeichnung des Trägersystems, mit Bedienungsanleitungen für das Trägersystem, mit Mittenmarkierungen, mit QR-Codes oder mit Hinweisen zur Montage und Demontage des Trägersystems oder mit anderen Informationen versehen, die im Zusammenhang mit der Bedienung, der Funktion oder der Identifikation des Trägersystems stehen.

In Ausgestaltung der Erfindung ist die Befestigungsvorrichtung dazu ausgebildet, auf einem Kugelkopf einer heckseitigen Anhängekupplung des Kraftfahrzeugs montiert zu werden, und heckseitig des Tragrahmens sind Rückleuchten und ein Kennzeichenhalter montiert. Ein derartiges Trägersystem ist in besonders vorteilhafter Weise geeignet für den Transport von Fahrrädern bei Personenkraftwagen, die mit einem Stufenheck, einem Fließheck oder einem Steilheck versehen sind. Alternativ ist die Befestigungsvorrichtung an ein Steck- und Lagersystem an einer Heckseite eines Kraftfahrzeugs angepasst. Hierzu sind fahrzeugseitig eine oder mehrere Lagerstellen vorgesehen, in die die Befestigungsvorrichtung mittels entsprechender Steckabschnitte einsteckbar und fixierbar ist.

In weiterer Ausgestaltung der Erfindung ist der wenigstens eine Informationsabschnitt in einem mittleren Bereich der Innenflanke hinter dem Kennzeichenhalter angeordnet. Bei dieser Ausgestaltung erstreckt sich die Stützschiene - in montiertem Zustand des Trägersystems - in Fahrzeugquerrichtung und ist so weit vom Kennzeichenhalter zum Kraftfahrzeug hin beabstandet, dass die geneigte Innenflanke der Stützschiene durch eine in Fahrzeuglängsrichtung hinter dem Trägersystem und damit hinter dem Kraftfahrzeug stehende Person erkennbar ist. Die Anordnung des Informationsabschnitts in einem mittleren Bereich der Innenflanke bedeutet eine zentrale Positionierung relativ zu dem Trägersystem. Zudem wird der Informationsabschnitt mit dieser Anordnung nicht durch die heckseitigen Rückleuchten des Trägersystems beeinträchtigt, da der Informationsabschnitt etwa mittig zwischen diesen Rückleuchten - gesehen aus einer vertikalen Fahrzeugmittellängsebene - angeordnet ist.

In weiterer Ausgestaltung der Erfindung ist die mit der Innenflanke und dem wenigstens einen Informationsabschnitt versehene Stützschiene benachbart zu dem Kennzeichenhalter an dem Tragrahmen angeordnet. Statt der zuvor beschriebenen Ausgestaltung, bei der die Stützschiene in beliebigem Abstand zu dem Kennzeichenhalter auf dem Tragrahmen montiert sein kann, sieht diese Ausgestaltung nun vor, die Stützschiene und damit den Informationsabschnitt unmittelbar benachbart zu dem Kennzeichenhalter zu positionieren. Dennoch muss der Abstand der Stützschiene und damit der Abstand der Innenflanke zum Kennzeichenhalter so groß sein, dass der Kennzeichenhalter bei einer Betrachtung des Trägersystems durch eine hinter dem Trägersystem stehende Person nicht den Informationsabschnitt und die Innenflanke verdeckt.

In weiterer Ausgestaltung der Erfindung ist der Informationsabschnitt durch dauerhaftes nachträgliches Aufbringen auf die Innenfläche der fertiggestellten Stützschiene, insbesondere durch Lackauftrag, durch eine Prägung, durch eine Gravur, insbesondere eine Laserstrahlgravur, oder durch ein gemeinsam mit der Herstellung der Stützschiene einstückig ausgeformtes Informationsfeld geschaffen. Damit wird der Informationsabschnitt durch Bearbeitung der Stützschiene während oder nach der Herstellung der Stützschiene geschaffen.

In weiterer Ausgestaltung der Erfindung ist der Informationsabschnitt durch ein separat hergestelltes Flachbauteil, insbesondere eine Platte oder eine Plakette, gebildet, das mittels mechanischer Befestigungsmittel mit der Stützschiene verbunden ist. Das Flachbauteil ist in vorteilhafter Weise flächig auf die Innenflanke der Stützschiene aufgebracht.

Für die Stützschiene wird die der Erfindung zugrunde liegende Aufgabe durch die Merkmale des Anspruchs 7 gelöst.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform eines erfindungsgemäßen Trägersystems in montiertem Zustand an einer Anhängekupplung eines Kraftfahrzeugs und
- Fig. 2: schematisch das montierte Trägersystem gemäß Fig. 1 in Relation zu einem hinter dem Kraftfahrzeug stehenden Betrachter.

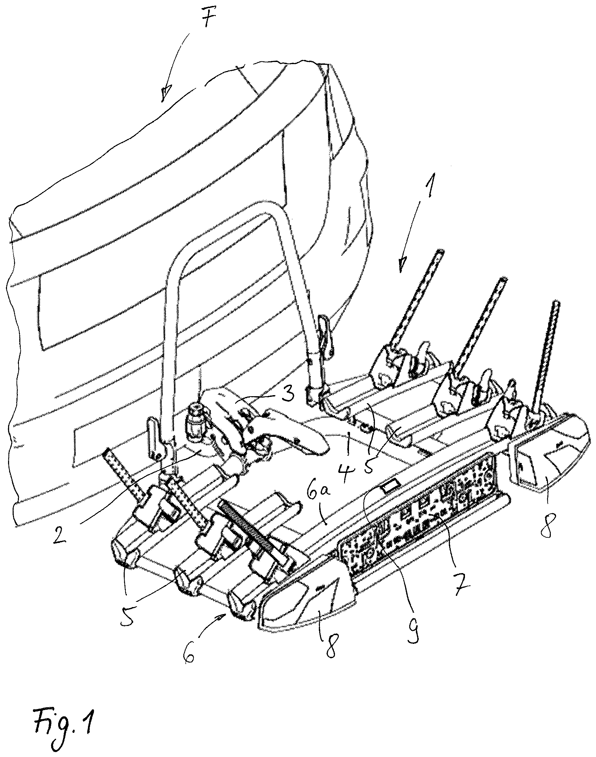

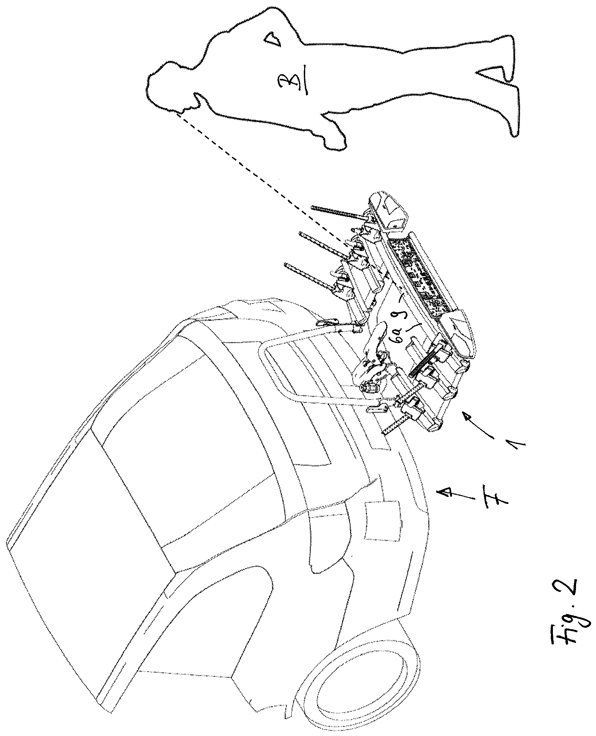

Ein Kraftfahrzeug F in Form eines Personenkraftwagens gemäß den Fig. 1 und 2 weist einen Heckbereich auf, an dem eine Anhängekupplung 2 vorgesehen ist. Die Anhängekupplung 2 weist in nicht näher dargestellter Weise einen Kugelkopf auf, auf dem ein Trägersystem 1 für eine Halterung und einen Transport von Fahrrädern befestigt ist. Hierzu weist das Trägersystem 1 eine Befestigungsvorrichtung 3 auf, die mittels einer lösbaren Kupplung eine Fixierung auf dem Kugelkopf der Anhängekupplung 2 oder ein Lösen von diesem Kugelkopf ermöglicht. Die Befestigungsvorrichtung 3 ist fest mit einem Tragrahmen 4 des Trägersystems 1 verbunden, wobei die Befestigungsvorrichtung 3 - in der Ausrichtung gemäß Fig. 1 und 2 gesehen - in einem vorderen Bereich des Tragrahmens 4 montiert ist. An einem rückseitigen Bereich des Tragrahmens 4 sind ein Kennzeichenhalter 7 und zwei Rückleuchten 8 befestigt, die den zentralen Kennzeichenhalter 7 beidseitig flankieren.

Der Tragrahmen 4 trägt mehrere Stützschienen 5, 6, wobei insgesamt vier kurze Stützschienen 5 und eine lange Stützschiene 6 vorgesehen sind. Jeweils ein Paar von Stützschienen 5 ist zur Stützung und Halterung von jeweils einem Fahrrad vorgesehen. Alle Stützschienen 5, 6 erstrecken sich in montiertem Zustand des Trägersystems 1 gemäß den Fig. 1 und 2 in Fahrzeugquerrichtung.

In normaler Fahrtrichtung des Kraftfahrzeugs F gesehen hinter den beiden Paaren von Stützschienen 5 ist eine lange Stützschiene 6 vorgesehen, die sich über eine gesamte Breite des Trägersystems 1 in Fahrzeugquerrichtung erstreckt.

Allen Stützschienen 5, 6 sind nicht näher bezeichnete Befestigungsmittel zur Fixierung von Vorder- und Hinterrädern jeweils eines Fahrrads zugeordnet, die mit flexiblen, lösbaren Fixierriemen versehen sind.

Die Stützschiene 6 bildet ein aus einer Aluminiumlegierung hergestelltes Längsprofil, das im Bereich seiner Oberseite als im Wesentlichen V-artige Rinne ausgebildet ist. Die V-artige Rinne ist begrenzt durch zwei Innenflanken der Stützschiene 6, wobei eine der Befestigungsvorrichtung 3 zugewandte Innenflanke 6a zu einer Horizontalebene schräg nach oben und nach vorne geneigt ist - bezogen auf ein Koordinatensystem des Kraftfahrzeugs F mit einer Fahrzeuglängsrichtung, einer Fahrzeughochrichtung und einer Fahrzeugquerrichtung. Die Neigung dieser Innenflanke 6a ist so gewählt, dass in montiertem Zustand des Trägersystems 1 an der Anhängekupplung 2 ein hinter dem Kraftfahrzeug F stehender Betrachter B mit seinen Augen (Blickrichtung in Fig. 2 gestrichelt dargestellt) plan auf die entsprechend schräggestellte Fläche der Innenflanke 6a blickt. Damit ist die gestrichelt dargestellte Blickrichtung gemäß Fig. 2 etwa orthogonal zu einer Oberfläche der Innenflanke 6a ausgerichtet. Die Erstreckung zwischen den Augen des Betrachters B und der Oberfläche der Innenflanke 6a entspricht somit zumindest weitgehend einer Flächennormalen zu der Innenflanke 6a.

Auf der Innenflanke 6a ist mittig und damit in der Flucht einer vertikalen Fahrzeugmittellängsebene - auf einen montierten Zustand des Trägersystems 1 am Kraftfahrzeug F bezogen - ein Informationsabschnitt 9 angebracht, der in der Ebene der Oberfläche der Innenflanke 6a oder parallel zu dieser Oberfläche der Innenflanke 6a ausgerichtet ist. Der Informationsabschnitt 9 ist dauerhaft mit der Innenflanke 6a und damit mit dem Längsprofil der Stützschiene 6 verbunden.

Beim dargestellten Ausführungsbeispiel wird der Informationsabschnitt 9 durch ein Flächenbauteil in Form einer Plakette oder einer Platte gebildet, die mithilfe mechanischer Befestigungsmittel, insbesondere in Form von Niet- oder Schraubverbindungen, mit der Innenflanke 6a verbunden ist. Das Flächenbauteil liegt flächig auf der Innenflanke 6a der Stützschiene 6 auf.

Bei nicht dargestellten Ausführungsbeispielen der Erfindung wird der Informationsabschnitt 9 durch einen Lackauftrag mittels Stempel, Pinsel, Siebdruck, Tampon oder Ähnlichem oder durch Bearbeitung der Oberfläche der Innenflanke 6a, vorzugsweise durch Gravur, durch Prägung oder durch Laserbeschriftung erzielt. Alternativ ist es gemäß einer weiteren Ausführungsform der Erfindung vorgesehen, den Informationsabschnitt durch Entfernung einer Oberflächenbeschichtung der Innenflanke 6a der Stützschiene 6 zu schaffen, insbesondere durch Wegätzen oder durch Entfernen mittels mechanischer Löseverfahren. Auch andere chemische Verfahren zum Entfernen einer entsprechenden Oberflächenbeschichtung, die insbesondere durch einen Lackauftrag gestaltet sein kann, sind gemäß Ausführungsformen der Erfindung vorgesehen.

Bei weiteren, nicht dargestellten Ausführungsbeispielen der Erfindung ist die Stützschiene zumindest abschnittsweise aus Kunststoff hergestellt. Dabei kann entweder das Stützschienenprofil insgesamt aus Kunststoff hergestellt sein, oder es sind lediglich die Innenflanken der Stützschiene aus Kunststoff gestaltet, die ein aus einer Leichtmetalllegiereung hergestelltes Stützschienenprofil überdecken.

## Patentansprüche

1. Trägersystem (1) für ein Kraftfahrzeug (F) mit einer an einem Außenbereich des Kraftfahrzeugs (F) montierbaren Befestigungsvorrichtung (3), sowie mit einem Tragrahmen (4), an dem die Befestigungsvorrichtung (3) angeordnet ist, und der wenigstens eine Stützschiene (5, 6) zur Abstützung von Vorder- und/oder Hinterrädern eines Fahrrads aufweist, **dadurch gekennzeichnet, dass** die wenigstens eine Stützschiene (6) eine relativ zu einer Horizontalen geneigte Innenflanke (6a) aufweist, die in montiertem Zustand des Tragrahmens (4) am Kraftfahrzeug (F) derart relativ zu einer Hochrichtung ausgerichtet ist, dass die Innenflanke (6a) für die Augen einer das Trägersystem (1) betrachtenden Person (B) erkennbar ist, und dass auf der Innenflanke (6a) wenigstens ein Informationsabschnitt (9) derart angebracht ist, dass der Informationsabschnitt (9) durch die Augen der Person (B) erfassbar ist.

2. Trägersystem (1) nach Anspruch 1, **dadurch gekennzeichnet, dass** die Befestigungsvorrichtung (3) dazu ausgebildet ist, auf einem Kugelkopf einer heckseitigen Anhängekupplung (2) des Kraftfahrzeugs (F) montiert zu werden, und dass heckseitig des Tragrahmens (4) Rückleuchten (8) und ein Kennzeichenhalter (7) montiert sind.

3. Trägersystem (1) nach Anspruch 2, **dadurch gekennzeichnet, dass** der wenigstens eine Informationsabschnitt (9) in einem mittleren Bereich der Innenflanke (6a) hinter dem Kennzeichenhalter (7) angeordnet ist.

4. Trägersystem (1) nach Anspruch 3, **dadurch gekennzeichnet, dass** die mit der Innenflanke (6a) und dem wenigstens einen Informationsabschnitt (9) versehene Stützschiene (6) benachbart zu dem Kennzeichenhalter (7) an dem Tragrahmen (4) angeordnet ist.

5. Trägersystem (1) nach einem der vorhergehenden Ansprüche, **dadurch gekennzeichnet, dass** der Informationsabschnitt (9) durch dauerhaftes nachträgliches Aufbringen auf die Innenflanke (6) der fertiggestellten Stützschiene (6), insbesondere durch Lackauftrag, durch eine Prägung, durch eine Gravur, insbesondere eine Laserstrahlgravur, oder durch ein gemeinsam mit der Herstellung der Stützschiene einstückig ausgeformtes Informationsfeld geschaffen ist.

6. Trägersystem (1) nach einem der vorhergehenden Ansprüche, **dadurch gekennzeichnet, dass** der Informationsabschnitt (9) durch ein separat hergestelltes Flachbauteil, insbesondere eine Platte oder eine Plakette, gebildet ist, das mittels mechanischer Befestigungsmittel mit der Stützschiene (6) verbunden ist.

7. Stützschiene (6) für ein Trägersystem (1) nach einem der vorhergehenden Ansprüche.
